# EUROPÄISCHE PATENTSCHRIFT

(11) **EP 2 914 361 B1**
(45) Veröffentlichungstag und Bekanntmachung des Hinweises auf die Patenterteilung: **09.12.2020**
(21) Anmeldenummer: 13779733.8
(22) Anmeldetag: 12.10.2013
(51) Int. Cl.: B01D 29/15, B01D 29/52, B01D 29/54, B01D 29/96

(54) **FILTERVORRICHTUNG FÜR FLUIDE**
FILTER APPARATUS FOR FLUIDS
DISPOSITIF FILTRANT POUR FLUIDES

(30) Priorität: 02.11.2012 DE 102012021595; 29.11.2012 US 201213688349
(43) Veröffentlichungstag der Anmeldung: 09.09.2015
(73) Patentinhaber: Hydac Process Technology GmbH, 66538 Neunkirchen (DE)
(72) Erfinder: HERGES, Knut, 66583 Spiesen-Elversberg (DE); LANG, Norbert, 66440 Blieskastel (DE); WNUK, Ralf, 66450 Bexbach/Kleinottweiler (DE); WELSCH, Nico, 66399 Mandelbachtal (DE)
(74) Vertreter: Bartels und Partner, Patentanwälte
(86) Internationale Anmeldenummer: PCT/EP2013/003072
(87) Internationale Veröffentlichungsnummer: WO 2014/067615

(56) Entgegenhaltungen:
- WO-A1-83/01012
- DE-A1- 2 261 817
- DE-A1- 2 638 142
- DE-A1- 2 638 142
- JP-A- H02 273 505
- US-A- 2 717 082
- US-A- 4 237 011
- US-A- 4 637 875

## Beschreibung

Die Erfindung betrifft eine Filtervorrichtung für Fluide, insbesondere für niedrigviskose Flüssigkeiten wie Wasser, mit den Merkmalen im Oberbegriff von Anspruch 1.

Filtervorrichtungen der vorstehend genannten Art sind Stand der Technik und kommen auf den verschiedensten Gebieten zum Einsatz. Als Beispiele seien aus der Vielzahl der Anwendungsmöglichkeiten lediglich die Anwendung zur Wasseraufbereitung, Trinkwasserfiltration, Rein- und Reinstwassererzeugung, Filtration von Kühlschmierstoffen und Waschfluiden etc. genannt. Zum Stand der Technik ist auf den von der Anmelderin unter der Produktbezeichnung PLF1 vertriebenen Leitungsfilter zu verweisen, der eine Filtervorrichtung der eingangs genannten Art verkörpert.

Wenn derartige Leitungsfilter für Anwendungen zum Einsatz kommen sollen, bei denen eine Feinfiltration großer Volumenströme und dementsprechend eine große zur Verfügung zu stellende Filterfläche erforderlich sind, beispielsweise von mehr als 500 m², ergeben sich Schwierigkeiten sowohl hinsichtlich der Auslegung des Filtergehäuses als auch der Durchführung von Auswechselvorgängen für den Austausch benutzter Filterelemente. Bei Filterflächen von mehr als 500 m² und Filterelementen in Form konventioneller Filterkerzen mit 67 mm Durchmesser und einer Länge von 40 Zoll, was einer Filterfläche von etwa 1 m² entspricht, sind im Filtergehäuse mehr als 500 Elementaufnahmen als Einbauplätze für die Filterelemente vorzusehen. Dies führt zu Gehäuseabmessungen, die, insbesondere was den Elementwechsel anbelangt, schwierig zu warten sind. Im Stand der Technik sind derartige Filterflächen daher nur über mehrere Filtergehäuse realisierbar.

Die US 4 237 011 beschreibt eine Filtervorrichtung für Fluide, insbesondere für niedrigviskose Flüssigkeiten wie Wasser, mit einem Filtergehäuse, in dem Elementaufnahmen für eine Mehrzahl von Filterelementen vorgesehen sind, deren Filtermedium im Filtergehäuse eine Rohseite von einer Reinseite trennt, wobei das Filtergehäuse für das Einsetzen und Herausnehmen der Filterelemente öffenbar ist, wobei für die Filterelemente ein Träger in der Art eines Korbes vorgesehen ist, der in das Filtergehäuse einsetzbar und aus diesem herausnehmbar ist und an dem die Filterelemente lösbar festlegbar sind, wobei der Korb eine Trägerplatte aufweist, wobei die Elementaufnahmen für die Festlegung von Filterelementen in Form von Filterkerzen eine Verbindungseinrichtung beinhalten, die einen fluiddurchlässigen Tragzylinder an der Trägerplatte derart festlegt, dass eine zugeordnete Filterkerze auf die Außenseite des Tragzylinders aufschiebbar und davon abziehbar ist. Damit die Filterelemente durch Kippen des Trägers in einen Auffangbehälter schüttbar sind, sind diese nicht am Tragzylinder festgelegt.

Weitere Filtervorrichtungen gehen aus der JP H02-273505, der WO 83/ 01012 A1, der DE 26 38 142 A1, der DE 22 61 817 A1, der US 2 717 082 und der US 4 637 875 hervor.

Im Hinblick auf diese Problematik liegt der Erfindung die Aufgabe zugrunde, eine Filtervorrichtung der betrachteten Gattung zur Verfügung zu stellen, die innerhalb eines Filtergehäuses eine gegenüber üblichen Filtervorrichtungen wesentlich vergrößerte Filterfläche zur Verfügung stellt, sich nichts desto weniger jedoch durch eine besondere Wartungsfreundlichkeit, was den Austausch benutzter Filterelemente betrifft, auszeichnet.

Erfindungsgemäß ist diese Aufgabe durch eine Filtervorrichtung gelöst, die die Merkmale des Patentanspruchs 1 in seiner Gesamtheit aufweist.

Demgemäß besteht eine wesentliche Besonderheit der Erfindung darin, dass die Trägerplatte bei der Einbauposition im Gehäuse die Rohseite von der Reinseite trennt und zur Bildung der Elementaufnahmen Fluiddurchgänge aufweist, an denen die Filterelemente derart lösbar festlegbar sind, dass die Fluiddurchgänge mit dem vom Filtermedium umgebenen inneren Filterhohlraum in Verbindung sind, und dass die Verbindungseinrichtung an jedem Fluiddurchgang einen daran verankerten Verbindungsstab aufweist, der sich durch den Tragzylinder erstreckt und im Bereich seines freien Endes eine Verschraubung zum Festlegen einer Haltescheibe aufweist, die den Endrand des Tragzylinders übergreift und diesen gegen die Trägerplatte drückt.

Mittels eines derartigen Tragzylinders lassen sich auch Filterkerzen großer Länge und entsprechend großer Filterfläche sicher in Position halten, wobei gleichzeitig Auswechselvorgänge einfach und bequem durch Abziehen vom zugehörigen Tragzylinder vorgenommen werden können.

Es ist ferner vorgesehen, dass für die Filterelemente ein Träger in der Art eines Korbes vorgesehen ist, der in das Filtergehäuse einsetzbar und aus diesem herausnehmbar ist und an dem die Filterelemente lösbar festlegbar sind. Dadurch, dass ein die Filterelemente tragender Korb als austauschbarer Einsatz des Filtergehäuses vorgesehen ist, kann eine große Anzahl von Filterelementen gemeinsam aus dem Gehäuse entnommen und in dies eingesetzt werden. Dadurch sind die mit Elementwechseln verbundenen Wartungsarbeiten wesentlich vereinfacht, selbst wenn der Korb zur Erzielung großer Filterflächen eine große Anzahl von Filterelementen enthält. Bei einem sich hierdurch ergebenden hohen Gewicht des Korbes kann dieser beispielsweise durch Anhängen eines Hebezeuges aus dem Gehäuse gehoben und außerhalb des Gehäuses in eine Lage gebracht werden, in der er einfach und bequem mit neuen Elementen bestückbar ist. Die so erreichte Wartungsfreundlichkeit ermöglicht auch den Einsatz der Filtervorrichtung unter erschwerten Bedingungen, wie auf Bohrplattformen bei Offshore-Ölfeldern. Wenn beim Betrieb betreffender Ölfelder eine Druckerhöhung erforderlich ist, wird behandeltes Seewasser von einer entsprechenden Bohrplattform ins Ölfeld gepumpt. Die zur Behandlung des Seewassers vorgesehene Filtervorrichtung ist bei derartigen Anwendungen auf eine Filterfläche von mehr als 500 m² bei einer Filterfeinheit von 5 *µ*m auszulegen. Dank der Anordnung der Filterelemente in einem aus dem Filtergehäuse herausnehmbaren Korb lassen sich diese Anforderungen mit einem einzigen Filtergehäuse realisieren. Auch lässt sich der Austausch der Filterelemente nach erfolgtem Herausnehmen des Korbes mittels eines Hebemittels an Bord der Plattform selbst bei rauen Umgebungsbedingungen einfach und sicher durchführen.

Der Korb weist eine Trägerplatte auf, die bei der Einbauposition im Gehäuse die Rohseite von der Reinseite trennt und zur Bildung der Elementaufnahmen Fluiddurchgänge aufweist, an denen die Filterelemente derart lösbar festlegbar sind, dass die Fluiddurchgänge mit dem vom Filtermedium umgebenen inneren Filterhohlraum in Verbindung sind.

Mit besonderem Vorteil kann die Anordnung hierbei so getroffen sein, dass das Filtergehäuse einen den Korb aufnehmenden kreiszylindrischen Abschnitt mit einer von einem abnehmbaren Deckel verschließbaren Öffnung aufweist, durch die hindurch der Korb einsetzbar und herausnehmbar ist, wobei die Trägerplatte kreisrund und bei der Einbauposition umfänglich an der Gehäusewand abgedichtet ist.

Wenn für die Abstützung der Trägerplatte des Korbes im Filtergehäuse ein an der Innenwand vorstehender Anlagering vorgesehen ist, gestaltet sich der Filterwechsel besonders einfach und bequem, weil der Korb zur Herausnahme lediglich vom Anlagering abzuheben ist und beim Wiedereinbau auf den Anlagering abzusetzen ist, ohne dass weitere Montagevorgänge erforderlich wären.

Um den Korb während der Filtration in der Funktionsposition zu sichern, kann an der Innenseite des Deckels zumindest ein axial vorstehender Niederhalter vorgesehen sein, der sich zum Halten der Trägerplatte des Korbes am Anlagering durch einen reinseitigen Abströmraum erstreckt, in dem sich ein Gehäuseauslass für das abgereinigte Fluid befindet.

Die Filterkerze zur Benutzung bei der Filtervorrichtung weist vorzugsweise zumindest zwei Filterelemente auf, die als Gleichteile ausgebildet sind und ein einen inneren Filterhohlraum umgebendes Filtermedium aufweisen, das endseits jeweils von einer Endkappe eingefasst ist, die den Zugang zum inneren Filterhohlraum freilässt, wobei die jeweiligen Filterelemente zueinander koaxial angeordnet und an miteinander zusammenwirkenden Endkappen abgedichtet miteinander verbunden sind. Wenn hierbei beispielsweise drei Filterelemente mit jeweils etwa 5 m² Filterfläche vorgesehen sind, so dass sich für jede Filterkerze eine Filterfläche von etwa 15 m² ergibt, dann lässt sich eine erforderliche Gesamtfilterfläche von mehr als 500 m² mit 36 Filterkerzen realisieren. Bei Anordnung in einem herausnehmbaren Korb lässt sich auch eine derartige Anzahl von Filterkerzen in einem einzigen Filtergehäuse wartungsfreundlich unterbringen.

Das Filterelement, das Bestandteil einer Filterkerze ist, weist zur Bildung abgedichteter Verbindungen zwischen mehreren, durch Gleichteile gebildeten und zueinander koaxial angeordneten Filterelementen eine Endkappe erster Art und eine dazu komplementär ausgebildete Endkappe zweiter Art auf. Bei einer derartigen Ausbildung der Endkappen lassen sich die einzelnen Elemente ohne weiteres zur Bildung einer aus mehreren Elementen zusammengesetzten Filterkerze stapeln.

Vorzugsweise ist die Anordnung hierbei so getroffen, dass zumindest die Endkappe einer Art ein Dichtelement zur Bildung einer Abdichtung mit der Endkappe der jeweils anderen Art des jeweils angrenzenden weiteren Filterelements aufweist, so dass bei Aneinanderliegen der Endkappen die Abdichtung gebildet ist.

In besonders vorteilhafter Weise kann hierbei die Endkappe der ersten Art an ihrer den Zugang zum Filterhohlraum bildenden Öffnung einen diese nach außen konisch erweiternden Trichter aufweisen, wobei die Endkappe der zweiten Art einen die Öffnung umgebenden, axial vorstehenden Ringkörper besitzt, der einen Außenkonus für einen passenden Eingriff in den Trichter der Endkappe erster Art bildet.

Zur Bildung der Abdichtung zwischen den benachbarten Elementen kann an der Innenseite des Trichters der Endkappe erster Art ein O-Ring zur Bildung einer leicht demontierbaren axialen und radialen Abdichtung angeordnet sein.

Nachstehend ist die Erfindung anhand eines in der Zeichnung dargestellten Ausführungsbeispiels im Einzelnen erläutert. Es zeigen:
- Fig. 1: in perspektivischer Schrägansicht und in Längsrichtung aufgeschnitten ein Ausführungsbeispiel der erfindungsgemäßen Filtervorrichtung;
- Fig. 2: eine gegenüber Fig. 1 in größerem Maßstab gezeichnete perspektivische Schrägansicht des als Träger für Filterkerzen vorgesehenen Korbes des Ausführungsbeispiels von Fig. 1;
- Fig. 3: eine in perspektivischer Schrägansicht gezeichnete Einzeldarstellung einer Filterkerze des Ausführungsbeispiels;
- Fig. 4: einen Längsschnitt der Filterkerze von Fig. 3;
- Fig. 5: einen gegenüber Fig. 3 und 4 in größerem Maßstab und mit Unterbrechungen dargestellten Längsschnitt der Filterkerze von Fig. 4;
- Fig. 6: einen in noch größerem Maßstab gezeichneten Längsschnitt eines einzelnen Filterelements der Filterkerze von Fig. 3 bis 5; und
- Fig. 7: einen vergrößert gezeichneten Teilausschnitt des in Fig. 6 mit VII bezeichneten Bezirks.

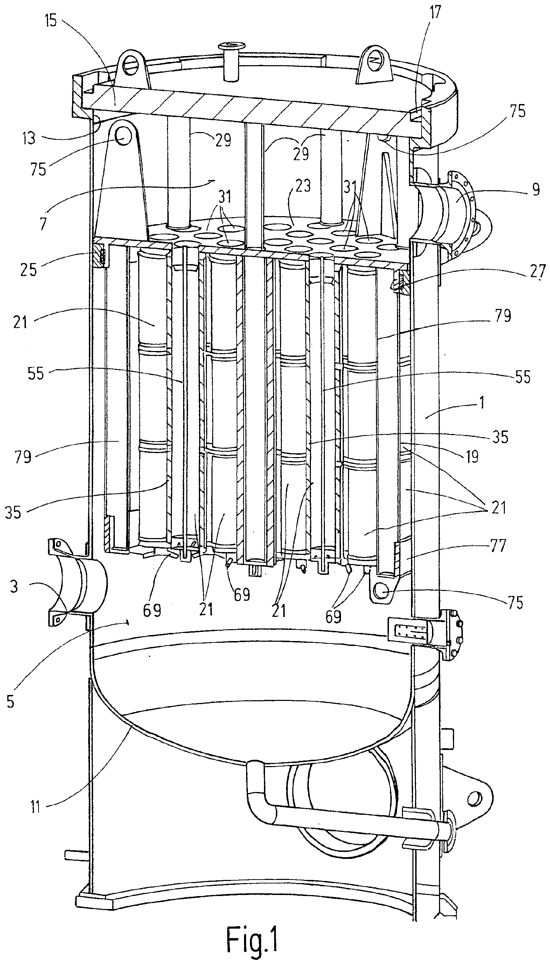

Nachstehend ist die Erfindung mit Bezug auf die Zeichnungen am Beispiel eines Leitungsfilters erläutert, das mit besonderem Vorteil für die Feinfilterung von Seewasser einsetzbar ist, das von einer Bohrplattform eines Offshore-Ölfeldes in dieses zur Druckerhöhung einleitbar ist, wobei hohe Volumenströme bei einer Filterfeinheit von 5 *µ*m mit Filterflächen im Bereich von 500 m² zu filtrieren sind. Die Fig. 1 zeigt ein Filtergehäuse 1 mit einem Fluideinlass 3 für den Zustrom des Seewassers zu einem rohseitigen Raum 5 des Gehäuses 1. Am reinseitigen Abströmraum 7 befindet sich am Gehäuse 1 ein Auslass 9. Das Gehäuse 1 ist, von einem gewölbten, geschlossenen Bodenteil 11 abgesehen, kreiszylindrisch, mit einer oberen Öffnung 13, die durch einen abnehmbaren Deckel 15 verschließbar ist. Der Deckel 15 ist drehbar und mittels eines Bajonettverschlusses 17 am Gehäuse 1 abnehmbar festlegbar.

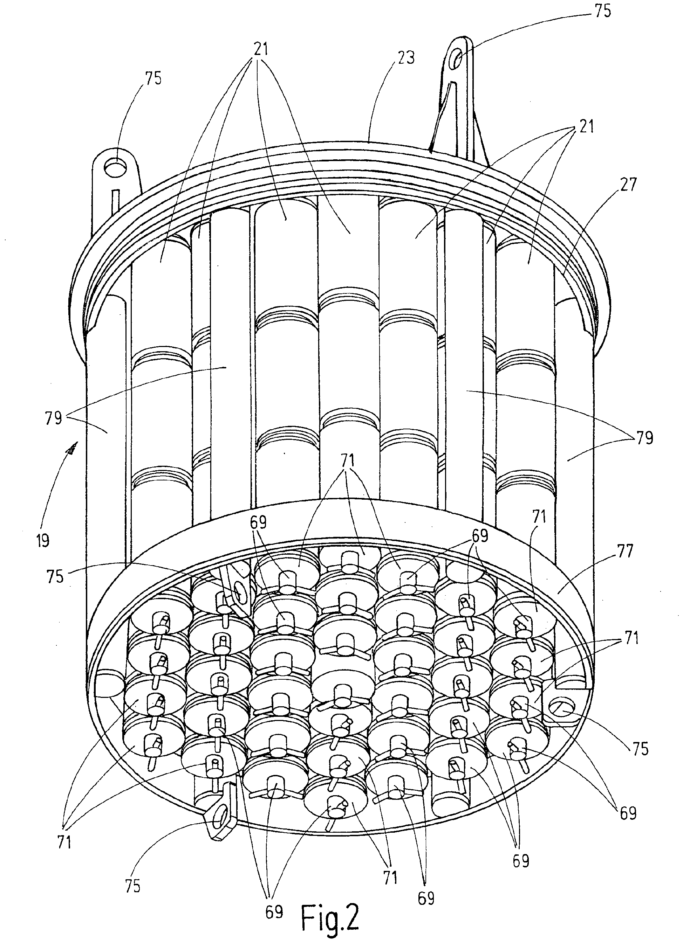

Zwischen dem rohseitigen Einströmraum 5 und dem reinseitigen Abströmraum 7 befindet sich die Filteranordnung, bestehend aus einem Korb 19 als Träger für eine Anzahl von Filterkerzen 21, die in der Zeichnung nicht sämtliche beziffert sind. Der Korb 19, der in Fig. 2 in Einzeldarstellung gezeigt ist, ist über die Öffnung 13 in das Gehäuse 1 einsetzbar und aus diesem herausnehmbar. Als Tragelement für die Filterkerzen 21 weist der Korb 19 eine kreisrunde Trägerplatte 23 auf, die, wenn der Korb 19 in seine Funktionsposition in das Gehäuse 1 eingesetzt ist, an einem Anlagering 25, der an der Innenseite des Gehäuses 1 vorsteht, anliegt, wobei ein Bund 27 der Trägerplatte 23 am Anlagering 25 abgedichtet ist. Die Trägerplatte 23 trennt im Gehäuse 1 den rohseitigen Einströmraum 5 vom reinseitigen Abströmraum 7. Um den Korb 19 in Anlage am Anlagering 25 zu halten, sind am Deckel 15 mehrere stabförmige Niederhalter 29 angebracht, die sich vom Deckel 15 axial durch den Abströmraum 7 zur Trägerplatte 23 erstrecken.

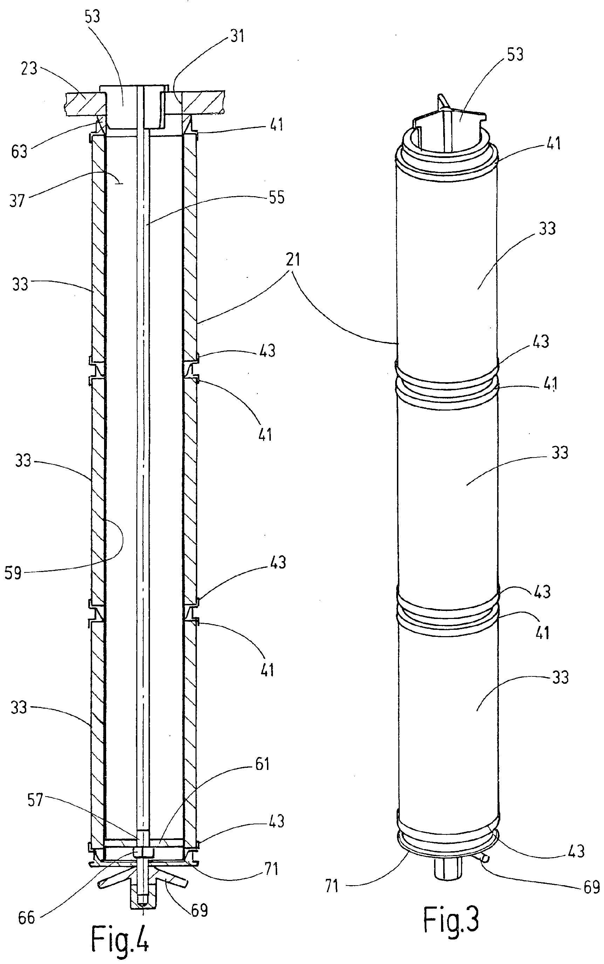

Letztere weist für jede Filterkerze 21 einen Fluiddurchgang 31 auf, von denen in Fig. 1 der Übersichtlichkeit halber lediglich einige beziffert sind. Bei dem in der Zeichnung dargestellten Beispiel sind für 36 Filterkerzen 21 dementsprechend 36 Fluiddurchgänge 31 vorgesehen. An jedem Fluiddurchgang 31 ist eine Elementaufnahme gebildet, an der die betreffende Filterkerze 21 lösbar festlegbar ist. Diesbezüglich nähere Einzelheiten sind den Fig. 3 bis 7 entnehmbar.

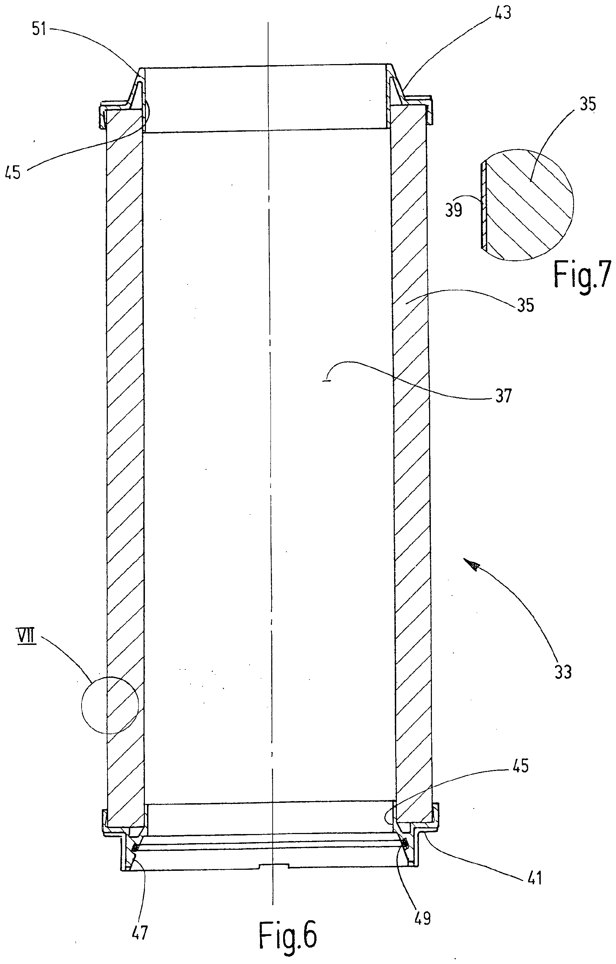

Die in Fig. 3 bis 5 in Einzeldarstellung gezeigten Filterkerzen 21 sind jeweils aus drei gestapelten, durch Gleichteile gebildete Filterelemente 33 aufgebaut, von denen eines in Fig. 6 in Einzeldarstellung gezeigt ist. Diese weisen ein Filtermedium 35 auf, das in an sich bekannter Weise, beispielsweise in Entsprechung zu dem von der Anmelderin vertriebenen Leitungsfilter PLF1, in Form eines Hohlzylinders einen inneren Filterhohlraum 37 umgibt und eine große plissierte Filterfläche zur Verfügung stellt. Derartige Filtermedien können ein Polyestermaterial und/oder Polypropylen enthalten und mehrlagig sein. Im vorliegenden Fall ist das Filtermedium 35, siehe Fig. 7, von einem Stützgewebe 39 umgeben. Ebenso kann hier ein Meshpack vorgesehen sein. Endseits ist das Filtermedium 35 jeweils von einer Endkappe 41 und 43 eingefasst, die beim vorliegenden Beispiel aus Polyamid gebildet sind. Das so gebildete Filterelement 33 ist als Einwegelement vollständig veraschbar. Ein solches Filterelement kann etwa 5 m² Filterfläche zur Verfügung stellen, so dass eine Filterkerze 21 mit drei Filterelementen 33 etwa 15 m² Filterfläche bietet. Wenn für eine Anwendung zur Druckerhöhung von Seewasser eine Gesamt-Filterfläche von etwa 500 m² erforderlich ist, kann dies realisiert werden, wenn im Korb 19 des Filtergehäuses 1 36 Plätze für Filterkerzen 21 vorgesehen sind, wie dies beim dargestellten Beispiel gezeigt ist.

Für einfaches Aufeinanderstapeln der Filterelemente 33 sind die Endkappen am einen und am anderen Ende unterschiedlich in der Weise gestaltet, dass eine Endkappe 41 erster Art eine zu einer Endkappe 43 zweiter Art komplementäre Form besitzt. Genauer gesagt weist die Endkappe 41 erster Art jeweils einen die Kappenöffnung 45 umgebenden, axial vorspringenden, nach außen konisch erweiterten Trichter 47 auf, an dessen Innenseite sich ein O-Ring 49 befindet. Die Endkappe 43 zweiter Art weist einen sich an die Öffnung 45 anschließenden, axial vorstehenden Ringkörper 51 auf, der einen Außenkonus für einen passenden Eingriff in den Trichter 47 der Endkappe 41 der ersten Art bildet. Bei einfachem Zusammensetzen der Einzelelemente 33 zur Bildung der Filterkerze 21 ist daher zwischen den Endkappen 41, 43 jeweils eine Axial-Radial-Dichtung gebildet.

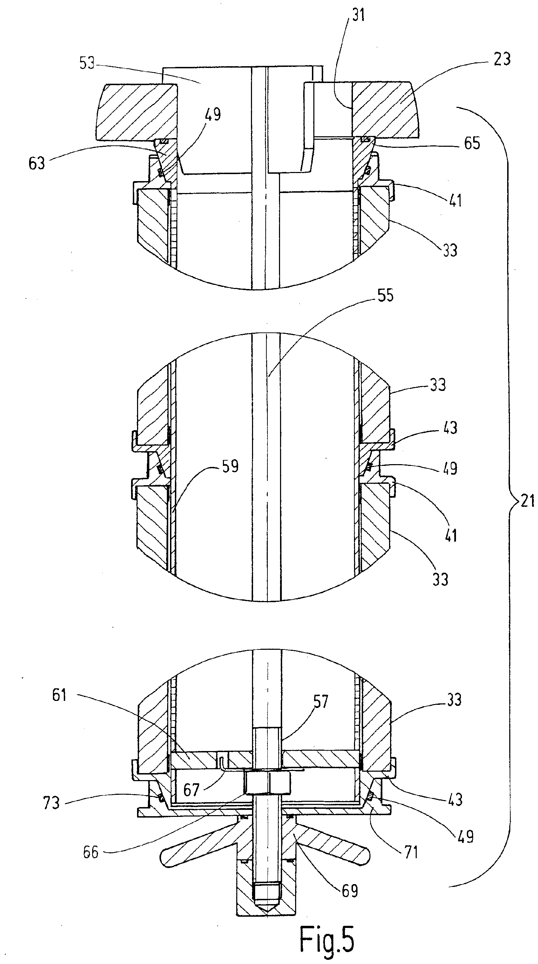

Die Filterkerzen 21 sind an den Fluiddurchgängen 31 der Trägerplatte 23 des Korbes 19 mittels einer Verbindungseinrichtung lösbar festlegbar, die einen sternförmigen Haltekörper 53 aufweist, der die Oberseite der Trägerplatte 23 übergreift (siehe Fig. 4) und an dem ein Verbindungsstab 55 mit seinem einen Ende festgelegt ist. Der Verbindungsstab 55 erstreckt sich in axialer Richtung bis über das untere Ende einer festzulegenden Filterkerze 21 hinaus, siehe insbesondere Fig. 4. Im Bereich des entsprechenden Endes ist der Verbindungsstab 55 mit einem Außengewinde 57 versehen. Wie am besten aus Fig. 5 ersichtlich ist, dient der Verbindungsstab 55 dazu, einen fluiddurchlässigen Tragzylinder 59, der eine verschiebbare Lagerung für eine aufgeschobene Filterkerze 21 bildet, an der Trägerplatte 23 des Korbes 19 festzulegen. Zu diesem Zweck ist eine Haltescheibe 61 mittels einer Mutter 66 am Gewinde 57 des Verbindungsstabes 55 derart verschraubt, dass die Haltescheibe 61 den Tragzylinder 59 gegen einen Konusring 63 und über diesen gegen die Trägerplatte 23 festspannt. Der Konusring 63 ist über einen O-Ring 65 an der Trägerplatte 23 abgedichtet und greift in den Trichter 47 der angrenzenden Endkappe 41 ein. Die Spannmutter 67 für die Haltescheibe 61 ist an dieser mittels einer Blechsicherung 67 gegen Lösen gesichert.

Um die betreffenden Filterkerzen 21 auf dem Tragzylinder 59 derart in Position zu halten, dass die Elemente 33 an den Endkappen 41, 43 gegenseitig abgedichtet sind und die Endkappe 41 des obersten Elements 33 über den Konusring 63 mit dem Fluiddurchgang 31 der Trägerplatte 23 in abgedichteter Fluidverbindung ist, ist am freien Ende des Verbindungsstabes 55 auf dem Gewinde 57 eine Flügelmutter 69 vorgesehen, mittels deren ein Verschlusskörper 71 lösbar an die Endkappe 43 des untersten Elements 33 andrückbar ist, wodurch die Endkappe 41 des obersten Elements 33 gegen den Konusring 63 gehalten und daran mittels des O-Ringes 49 abgedichtet ist. Der Verschlusskörper 71 seinerseits ist durch einen O-Ring 73 an der zugeordneten Endkappe 43 abgedichtet. Somit ist der reinseitige Filterhohlraum 37, der über den Fluiddurchgang 31 mit dem Abströmraum 7 in Verbindung ist, gegenüber dem rohseitigen Einströmraum 5 nur über das Filtermedium der Filterkerzen 21 in Verbindung, ansonsten jedoch abgedichtet.

Wenn der Korb 19 mit benutzten Filterkerzen 21 für einen Austauschvorgang aus dem Gehäuse 1 ausgehoben ist, beispielsweise durch Anhängen eines Hebemittels an Anschlagösen 75 und in einer Position abgelegt ist, in der, wie in Fig. 2 gezeigt, die Unterseite des Korbes 19 frei zugänglich ist, kann durch Lösen der Flügelmuttern 69, die in der Zeichnung nur teilweise beziffert sind, die Haltescheibe 71 abgenommen werden, wodurch die Filterkerzen 21 freigegeben sind und vom Tragzylinder 59 abgezogen werden können. Nach Aufschieben neuer Filterkerzen 21 und Befestigen durch Festschrauben der Haltescheiben 71 ist der neu bestückte Korb 19 wieder für das Einsetzen in das Gehäuse 1 bereit. Wie Fig. 1 und 2 zeigen, weist der Korb 19 einen Einfassungsring 77 auf, der, konzentrisch zum Bund 27 der Trägerplatte 23 die Gruppe der Filterkerzen 21 an deren unterem, freien Ende umgibt und mit dem Bund 27 über Streben 79 verbunden ist, die mit dem Bund 27 und dem Ring 77 verschweißt sind und an dem ebenfalls Anschlagösen 75 zur Handhabung des Korbes 19 angebracht sind.

## Patentansprüche

1. Filtervorrichtung für Fluide, insbesondere für niedrigviskose Flüssigkeiten wie Wasser, mit einem Filtergehäuse (1), in dem Elementaufnahmen (31) für eine Mehrzahl von Filterelementen (33) vorgesehen sind, deren Filtermedium (35) im Filtergehäuse (1) eine Rohseite (5) von einer Reinseite (7) trennt, wobei das Filtergehäuse (1) für das Einsetzen und Herausnehmen der Filterelemente (33) öffenbar ist, wobei für die Filterelemente (33) ein Träger in der Art eines Korbes (19) vorgesehen ist, der in das Filtergehäuse (1) einsetzbar und aus diesem herausnehmbar ist und an dem die Filterelemente (33) lösbar festlegbar sind, wobei der Korb (19) eine Trägerplatte (23) aufweist, wobei die Elementaufnahmen für die Festlegung von Filterelementen in Form von Filterkerzen (21) eine Verbindungseinrichtung (53, 55, 59, 61) beinhalten, die einen fluiddurchlässigen Tragzylinder (59) an der Trägerplatte (23) derart festlegt, dass eine zugeordnete Filterkerze (21) auf die Außenseite des Tragzylinders (59) aufschiebbar und davon abziehbar ist, **dadurch gekennzeichnet, dass** die Trägerplatte (23) bei der Einbauposition im Gehäuse (1) die Rohseite (5) von der Reinseite (7) trennt und zur Bildung der Elementaufnahmen Fluiddurchgänge (31) aufweist, an denen die Filterelemente (33) derart lösbar festlegbar sind, dass die Fluiddurchgänge (31) mit dem vom Filtermedium (35) umgebenen inneren Filterhohlraum (37) in Verbindung sind, und dass die Verbindungseinrichtung (53, 55, 59, 61) an jedem Fluiddurchgang (31) einen daran verankerten Verbindungsstab (55) aufweist, der sich durch den Tragzylinder (59) erstreckt und im Bereich seines freien Endes eine Verschraubung (57, 66) zum Festlegen einer Haltescheibe (61) aufweist, die den Endrand des Tragzylinders (59) übergreift und diesen gegen die Trägerplatte (23) drückt.

2. Filtervorrichtung nach Anspruch 1, **dadurch gekennzeichnet, dass** das Filtergehäuse (1) einen den Korb (19) aufnehmenden kreiszylindrischen Abschnitt mit einer von einem abnehmbaren Deckel (15) verschließbaren Öffnung (13) aufweist, durch die hindurch der Korb (19) einsetzbar und herausnehmbar ist, und dass die Trägerplatte (23) kreisrund und bei der Einbauposition umfänglich an der Gehäusewand abgedichtet ist.

3. Filtervorrichtung nach Anspruch 1 oder 2, **dadurch gekennzeichnet, dass** für die Abstützung der Trägerplatte (23) des Korbes (19) im Filtergehäuse (1) ein an der Innenwand vorstehender Anlagering (25) vorgesehen ist.

4. Filtervorrichtung nach Anspruch 2, **dadurch gekennzeichnet, dass** an der Innenseite des Deckels (15) zumindest ein axial vorstehender Niederhalter (29) vorgesehen ist, der sich zum Halten der Trägerplatte (23) des Korbes (19) am Anlagering (25) durch einen reinseitigen Abströmraum (7) erstreckt, an dem sich ein Gehäuseauslass (9) befindet.

5. Filtervorrichtung nach einem der vorstehenden Ansprüche, **dadurch gekennzeichnet, dass** die auf den jeweiligen Tragzylinder (59) aufgeschobene Filterkerze (21) mittels eines den Filterhohlraum (37) an dem von der Trägerplatte (23) abgewandten Ende verschließenden Verschlusskörpers (71) in einer Funktionsposition lösbar festlegbar ist, in der die betreffende Filterkerze (21) mit ihrem offenen Ende in abgedichteter Fluidverbindung mit dem zugehörigen Fluiddurchgang (31) der Trägerplatte (23) ist.

6. Filtervorrichtung nach Anspruch 5, **dadurch gekennzeichnet, dass** der Verschlusskörper (71) durch eine lösbare Verschraubung (69) mit dem Verbindungsstab (55) in einer die Filterkerze (21) in Funktionsposition haltenden Stellung lösbar festlegbar ist.

7. Filtervorrichtung nach einem der vorstehenden Ansprüche mit einer Filterkerze mit zumindest einem, vorzugsweise zumindest zwei, Filterelementen (33), die als Gleichteile ausgebildet sind und ein einen inneren Filterhohlraum (37) umgebendes Filtermedium (35) aufweisen, das endseits jeweils von einer Endkappe (41, 43) eingefasst ist, die den Zugang zum inneren Filterhohlraum (37) freilässt, wobei die jeweiligen Filterelemente (33) zueinander koaxial angeordnet und an miteinander zusammenwirkenden Endkappen (41, 43) abgedichtet miteinander verbunden sind.

8. Filtervorrichtung nach Anspruch 7 mit dem Filterelement, als Bestandteil der Filterkerze, mit einem einen inneren Filterhohlraum (37) umgebenden Filtermedium (35), das endseits jeweils von einer einen Zugang zum Filterhohlraum (37) freilassenden Endkappe (41, 43) eingefasst ist, wobei das Filterelement zur Bildung abgedichteter Verbindungen zwischen mehreren, durch Gleichteile gebildeten und zueinander koaxial angeordneten Filterelementen (33) eine Endkappe (41) erster Art und eine dazu komplementär ausgebildete Endkappe (43) zweiter Art aufweist.

9. Filtervorrichtung nach Anspruch 8, **dadurch gekennzeichnet, dass** zumindest die Endkappe (41) einer Art ein Dichtelement (49) zur Bildung einer Abdichtung mit der Endkappe (43) der jeweils anderen Art des jeweils angrenzenden weiteren Filterelementes (33) aufweist.

10. Filtervorrichtung nach Anspruch 8 oder 9, **dadurch gekennzeichnet, dass** die Endkappe (41) der ersten Art an ihrer den Zugang zum Filterhohlraum (37) bildenden Öffnung einen diese nach außen konisch erweiternden Trichter (47) besitzt und dass die Endkappe (43) der zweiten Art einen die Öffnung umgebenden, axial vorstehenden Ringkörper (51) besitzt, der einen Außenkonus für einen passenden Eingriff in den Trichter (47) der Endkappe (41) erster Art bildet.

11. Filtervorrichtung nach einem der Ansprüche 8 bis 10, **dadurch gekennzeichnet, dass** an der Innenseite des Trichters (47) der Endkappe (41) erster Art ein O-Ring (49) angeordnet ist.

## Claims

1. A filter apparatus for fluids, especially for low-viscosity liquids such as water, having a filter housing (1) in which element holders (31) for a plurality of filter elements (33) are provided, the filter medium (35) of said filter elements in the filter housing (1) separating a dirty side (5) from a clean side (7), wherein the filter housing (1) can be opened to insert and remove the filter elements (33), wherein a carrier in the form of a basket (19) is provided for the filter elements (33), said carrier being able to be inserted into and removed from the filter housing (1) and detachably fixed to the filter elements (33), wherein the basket (19) comprises a carrier plate (23), wherein the element holders for fixing filter elements in the form of filter tubes (21) contain a connecting device (53, 55, 59, 61) which fixes a fluid-permeable support cylinder (59) to the carrier plate (23) such that an assigned filter tube (21) can be pushed onto and removed from the outside of the support cylinder (59), **characterised in that** the carrier plate (23) separates the dirty side (5) from the clean side (7) in the installation position in the housing (1) and comprises fluid passages (31) to form the element holders, the filter elements (33) being able to be detachably fixed to said passages in such a way that the fluid passages (31) are connected to the inner filter cavity (37) which is surrounded by filter medium (35) and **in that** the connecting device (53, 55, 59, 61) comprises a connecting rod (55) anchored to each fluid passage (31), which extends through the support cylinder (59) and comprises a screw fitting (57, 66) in the region of its free end to fix a holding plate (61), which extends over the end edge of the support cylinder (59) and presses said support cylinder against the carrier plate (23).

2. Filter apparatus according to claim 1, **characterised in that** the filter housing (1) has a cylindrical cross section receiving the basket (19) with an aperture (13) that can be sealed by a removable lid (15), through which the basket (19) can be inserted and removed, and **in that** the support plate (23) is circular and sealed extensively at the housing wall when in the installation position.

3. Filter apparatus according to either claim 1 or claim 2, **characterised in that** a contact ring (25) protruding from the inner wall is provided to support the carrier plate (23) of the basket (19) in the filter housing (1).

4. Filter apparatus according to claim 2, **characterised in that** at least one axially protruding hold-down device (29) is provided on the inside of the lid (15), said hold-down device extending through a discharge chamber (7) on the clean side to hold the carrier plate (23) of the basket (19) on the contact ring (25), a housing outlet (9) being located on said chamber.

5. Filter apparatus according to any one of the preceding claims, **characterised in that** the filter tube (21), which is pushed onto the respective support cylinder (59), can be detachably fixed in an operating position by means of a sealing body (71) that seals the filter cavity (37) at the end facing away from the carrier plate (23), the open end of the relevant filter tube (21) being in a sealed fluidic connection with the corresponding fluid passage (31) of the carrier plate (23) in said operating position.

6. Filter apparatus according to claim 5, **characterised in that** the sealing body (71) can be detachably fixed in a position holding the filter tube (21) in the operating position by means of a detachable screw fitting (69) with the connecting rod (55).

7. Filter apparatus according to any one of the preceding claims with the filter tube, with at least one, preferably at least two filter elements (33) which are designed as identical parts and comprise a filter medium (35) surrounding an inner filter cavity (37), said medium being contained at each end by an end cap (41, 43), which allows access to the inner filter cavity (37), wherein the respective filter elements (33) are arranged coaxially in relation to one another and connected such that they are sealed to one another at end caps (41, 43) that interact with one another.

8. Filter apparatus according to claim 7 with the filter element, as part of the filter tube, with a filter medium (35) surrounding an inner filter cavity (37), said medium being contained at each end by an end cap (41, 43) allowing access to the filter cavity (37), wherein the filter element comprises an end cap (41) of the first type and an end cap (43) of a second type with a complementary design to form sealed connections between a plurality of filter elements (33) formed by identical parts and arranged coaxially in relation to one another.

9. Filter apparatus according to claim 8, **characterised in that** at least the end cap (41) of one type comprises a sealing element (49) to form a seal with the end cap (43) make up of the respective other type of the other respectively adjacent filter element (33).

10. Filter apparatus according to either claim 8 or claim 9, **characterised in that** the end cap (41) of the first type has a funnel (47) extending conically outwards at the aperture forming the access to the filter cavity (37) and **in that** the end cap (43) of the second type has an axially protruding annular body (51) surrounding the aperture, which forms an outer cone for suitable engagement in the funnel (47) of the end cap (41) of the first type.

11. Filter apparatus according to any one of claims 8 to 10, **characterised in that** an O-ring (49) is arranged on the inside of the funnel (47) of the end cap (41) of the first type.

## Revendications

1. Installation de filtration de fluide, notamment de liquide à faible viscosité comme de l'eau, comprenant une enveloppe (1) de filtre, dans laquelle sont prévus des logements (31) de réception d'une pluralité d'éléments (33) de filtre, dont le milieu (35) filtrant sépare, dans l'enveloppe (1) de filtre, un côté (5) brut d'un côté (7) propre, l'enveloppe (1) de filtre pouvant être ouverte pour insérer et retirer les éléments (33) de filtre,
dans laquelle il est prévu, pour les éléments (33) de filtre, un support à la manière d'un panier (19), qui peut être inséré dans l'enveloppe (1) de filtre et peut en être retiré et auquel les éléments (33) de filtre peuvent être fixés de manière amovible, le panier (19) ayant une plaque (23) de support, les logements d'éléments comportant, pour la fixation d'éléments de filtre sous la forme de bougies (21) de filtre, un dispositif (53, 55, 59, 61) de liaison, qui fixe un cylindre (59) porteur perméable au fluide à la plaque (23) de support, de manière à ce qu'une bougie (21) de filtre associée puisse être glissée sur la face extérieure du cylindre (59) porteur et en être retirée, **caractérisée en ce que** la plaque (23) de support sépare, dans la position de montage dans l'enveloppe (1), le côté (5) brut du côté (7) propre et a, pour la formation des logements d'éléments, des passages (31) pour du fluide où les éléments (33) de filtre peuvent être fixés de manière amovible, de manière à ce que les passages (31) pour du fluide communiquent avec la cavité (37) intérieure de filtre entourée du milieu (35) filtrant et **en ce que** le dispositif (53, 55, 59, 61) de liaison a, à chaque passage (31) pour du fluide, une barre (55) de liaison, qui y est arrimée, qui s'étend dans le cylindre (59) porteur et qui a, dans la région de son extrémité libre, un vissage (57, 66) pour fixer un disque (61) de maintien, qui chevauche le bord d'extrémité du cylindre (59) porteur et le repousse sur la plaque (23) de support.

2. Installation de filtration suivant la revendication 1, **caractérisée en ce que** l'enveloppe (1) de filtre a une partie cylindrique circulaire recevant le panier (19) et ayant une ouverture (13) pouvant être fermée par un couvercle (15) pouvant être enlevé, ouverture par laquelle le panier (19) peut être mis et retiré, et **en ce que** la plaque (23) de support circulaire est rendue étanche dans la position de montage tout autour sur la paroi de l'enveloppe.

3. Installation de filtration suivant la revendication 1 ou 2, **caractérisé en ce que**, pour l'appui de la plaque (23) de support du panier (19) dans l'enveloppe (1) de filtre, est prévu un anneau (25) de contact en saillie sur la paroi intérieure.

4. Installation de filtration suivant la revendication 2, **caractérisée en ce que**, du côté intérieur du couvercle (15), est prévu au moins un dispositif (29) en saillie axial de maintien vers le bas, qui s'étend pour maintenir la plaque (23) de support du panier (19) sur l'anneau (25) de contact, dans un espace (7) d'évacuation du côté propre où se trouve une sortie (9) de l'enveloppe.

5. Installation de filtration suivant l'une des revendications précédentes, **caractérisée en ce que** la bougie (21) de filtre, enfilée sur le cylindre (59) porteur respectif, peut, au moyen d'un obturateur (71) fermant la cavité (37) de filtre du côté loin de la plaque (23) support, être fixée de manière amovible dans une position de fonctionnement, dans laquelle la bougie (21) de filtre concernée est, par son extrémité ouverte, en liaison fluidique rendue étanche avec le passage (31) pour du fluide associé de la plaque (23) de support.

6. Installation de filtration suivant la revendication 5, **caractérisée en ce que** l'obturateur (71) peut être fixé de manière amovible dans un état maintenant la bougie (21) de filtre en position de fonctionnement par un vissage (69) amovible avec la barre (55) de liaison.

7. Installation de filtration suivant l'une des revendications précédentes, ayant la bougie de filtre ayant au moins un, de préférence au moins deux éléments (33) de filtre, qui sont constitués pareillement et qui ont un milieu (35) filtrant, qui entoure une cavité (37) intérieure de filtre, et qui est enchâssé du côté de l'extrémité, respectivement, par une coiffe (41, 43) d'extrémité, qui dégage l'accès à la cavité (37) intérieure de filtre, les éléments (33) de filtre respectifs étant disposés coaxialement les uns par rapport aux autres et reliés entre eux d'une manière étanche à des coiffes (41, 43) d'extrémité coopérant entre elles.

8. Installation de filtration suivant la revendication 7, ayant l'élément de filtre, comme partie constitutive de la bougie de filtre, ayant un milieu (35) filtrant entourant une cavité (37) intérieure de filtre et enchâssé du côté de l'extrémité, respectivement, par une coiffe (41, 43) d'extrémité dégageant un accès à la cavité (37) de filtre, l'élément de filtre ayant, pour former des liaisons étanches entre plusieurs éléments (33) de filtre formés pareillement et disposés coaxialement entre eux, une coiffe (41) d'extrémité d'un premier type et une coiffe (43) d'extrémité constituée de manière complémentaire d'un deuxième type.

9. Installation de filtration suivant la revendication 8, **caractérisée en ce qu'**au moins la coiffe (41) d'extrémité d'un type a un élément (49) d'étanchéité pour former une étanchéité avec la coiffe (43) d'extrémité de l'autre type de, respectivement, l'autre élément (33) de filtre voisin.

10. Installation de filtration suivant la revendication 8 ou 9, **caractérisée en ce que** la coiffe (41) d'extrémité du premier type possède, à son ouverture formant l'accès à la cavité (37) de filtre, un entonnoir (47) s'évasant coniquement vers l'extérieur, et **en ce que** la coiffe (43) d'extrémité du deuxième type a une pièce (51) annulaire en saillie axialement entourant l'ouverture et formant un cône extérieur pour une pénétration adaptée dans l'entonnoir (47) de la coiffe (41) d'extrémité du premier type.

11. Installation de filtration suivant l'une des revendications 8 à 10, **caractérisée en ce qu'**un joint (49) torique est disposé sur la face intérieure de l'entonnoir (47) de la coiffe (41) d'extrémité du premier type.
